# EUROPÄISCHE PATENTANMELDUNG

(11) **EP 0 836 055 A1**
(43) Veröffentlichungstag der Anmeldung: **15.04.1998**
(21) Anmeldenummer: 97810693.8
(22) Anmeldetag: 22.09.1997
(51) Int. Cl.: F23R 3/00, F02K 9/34, F01D 11/00

(54) **Vorrichtung zur Dichtung von Brennkammerziegeln**

(30) Priorität: 11.10.1996 DE 19641957
(71) Anmelder: ABB RESEARCH LTD., 8050 Zürich (CH)
(72) Erfinder: Höcker, Rainer, Dr., 79761 Waldshut-Tiengen (CH)
(74) Vertreter: Pöpper, Evamaria, Dr.

(57) **Zusammenfassung**

Bei einer Vorrichtung zur Dichtung von zwangsweise konvektiv gekühlten Brennkammerziegeln (8), wobei die Ziegel (8) in mindestens zwei Ziegelreihen (6) im Sinne eines zunehmenden Brennraumdurchmessers angeordnet und in Tragmäntel (7) eingehängt sind, und das Kühlmedium (12) zwischen Ziegel (8) und Tragmantel (7) strömt, und wobei zwischen dem Tragmantel (7) der vorangegangenen Ziegelreihe (6) und der jeweils nachfolgenden Ziegelreihe (6) ein Spalt (9) vorhanden ist, welcher mittels einer Dichtung (10) gedichtet ist, sind über den Umfang verteilt am Tragmantel (7) mehrere Federn (11) fest verankert, welche mit der Dichtung (10) in Verbindung stehen und zumindestens während des Betriebes der Brennkammer die Dichtung (10) in den Spalt (9) zwischen Tragmantel (7) und Ziegel (8) drücken. Dadurch wird die Dichtwirkung erhöht, ohne dass thermische Spannungen eingeführt werden. Die erfindungsgemässe Vorrichtung ist gut für eine Umrüstung bestehender Brennkammern geeignet, weil sie keine Änderung der bisher eingesetzten Ziegel (8), Tragmäntel (7) und Dichtungen (10) erfordern.

## Beschreibung

### Technisches Gebiet

Die Erfindung bezieht sich auf das Gebiet der Verbrennungstechnik. Sie betrifft eine Vorrichtung zur Dichtung von Brennkammerziegeln mit erhöhter Dichtwirkung, welche für Silobrennkammern und Kessel angewendet werden kann.

### Stand der Technik

Brennkammern, beispielsweise von Gasturbinenanlagen, sind hohen thermischen Beanspruchungen ausgesetzt. Aus diesem Grunde sind zur Vermeidung von thermischen Spannungen die innersten Wände der Brennkammern aus vielen einzelnen, relativ lose mit dem Tragmantel verbundenen Ziegeln aufgebaut. Diese lose Verbindung führt zwangsläufig zu Spalten zwischen den Ziegeln und dem Tragmantel. Da die Ziegel luftgekühlt sind, verursachen die Spalte unerwünschte Undichtigkeiten. Es ist bekannt, insbesondere im Kopfbereich der Ziegel grössere Spalte mit Dichtungen zu dichten. Diese Dichtungen sind aus thermischen Gründen ebenfalls lose eingelegt und mit Hilfe von Dichtungssicherungen punktuell befestigt.

Auf Grund der sich ändernden Randbedingungen in der Verbrennungstechnik genügt aber eine solche Lösung nicht mehr den heutigen Anforderungen. Die angestrebten hohen Verbrennungstemperaturen, beispielsweise in Gasturbinenanlagen, machen es erforderlich, dass eine grössere Menge Kühlluft zur Kühlung der Brennkammer eingesetzt werden muss. Andererseits besteht die Forderung nach einer Senkung der NOx-Emissionen bei der Verbrennung. Somit besteht die Notwendigkeit, die verbleibenden Undichtigkeiten der Brennkammer weiter zu reduzieren, um den Leckageverlust zu minimieren.

### Darstellung der Erfindung

Die Erfindung versucht, alle diese Nachteile zu vermeiden. Ihr liegt die Aufgabe zugrunde, eine Vorrichtung zur Dichtung von Brennkammerziegeln zu schaffen, welche es gestattet, die Dichtwirkung ohne Hervorrufen von thermischen Spannungen gegenüber dem bekannten Stand der Technik zu erhöhen. Ausserdem soll die Vorrichtung ohne Änderung der bekannten Ziegel, des Tragmantels und der Dichtung einsetzbar sein und somit gut zur Umrüstung bestehender Brennkammern geeignet sein.

Erfindungsgemäss wird dies dadurch erreicht, dass bei einer Vorrichtung gemäss dem Oberbegriff des Anspruchs 1 über den Umfang verteilt am Tragmantel mehrere Federn fest verankert sind, welche mit der Dichtung in Verbindung stehen und zumindestens während des Betriebes der Brennkammer die Dichtung in den Spalt zwischen Tragmantel und Ziegel drücken.

Die Vorteile der Erfindung bestehen darin, dass die unter Federspannung an den Tragmantel und/oder Ziegel angepressten Dichtungen die Spalte zwischen Dichtung und Ziegel bzw. Tragmantel minimieren. Dadurch wird die Dichtwirkung erhöht, und die Brennkammer kann mit modernen Verbrennungstechniken betrieben werden. Die zusätzlich gegenüber den nur punktuell befestigten Dichtungen gemäss bisher bekanntem Stand der Technik angebrachten Federn können problemlos auf den Tragmänteln verankert, beispielsweise verschweisst, werden. Eine Umrüstung bestehender Brennkammerh ist somit ohne weiteres möglich, weil keine Änderungen der bisher verwendeten Ziegel, des Tragmantels oder der Dichtung notwendig sind.

Es ist besonders zweckmässig, wenn die Feder die Dichtung gleichzeitig an den Tragmantel und an den Ziegel drückt, weil dann die Dichtwirkung am besten ist. Aber es ist auch noch vorteilhaft, wenn nur ein Anpressdruck an den Ziegel oder an den Tragmantel entsteht. Auch in diesem Falle wird der o.g. Spalt verkleinert.

Ferner ist es vorteilhaft, wenn als Feder handelsübliche Schraubenfedern, Blattfedern oder Torsionsstabfedern verwendet werden.

Schliesslich werden mit Vorteil Material und Geometrie der Feder so gewählt, dass sie im kalten Zustand der Brennkammer nahezu kräftefrei ist und sich im heissen Zustand die Federkräfte selbst richtig einstellen.

### Kurze Beschreibung der Zeichnung

In der Zeichnung ist ein Ausführungsbeispiel der Erfindung anhand einer Gasturbinensilobrennkammer dargestellt.

Es zeigen:
- Fig. 1: eine schematische Darstellung der Brennkammer in einem Längsschnitt;
- Fig. 2: eine Detaildarstellung von Fig. 1 im Bereich der Ziegeleinsätze mit einer ersten Ausführungsvariante der Erfindung;
- Fig. 3: eine weitere Ausführungsvariante der Erfindung.

Es sind nur die für das Verständnis der Erfindung wesentlichen Elemente gezeigt. Nicht dargestellt sind von der Anlage beispielsweise die Brenner und die Sekundärluftdüsen. Die Strömungsrichtung der Arbeitsmittel ist mit Pfeilen bezeichnet.

### Weg zur Ausführung der Erfindung

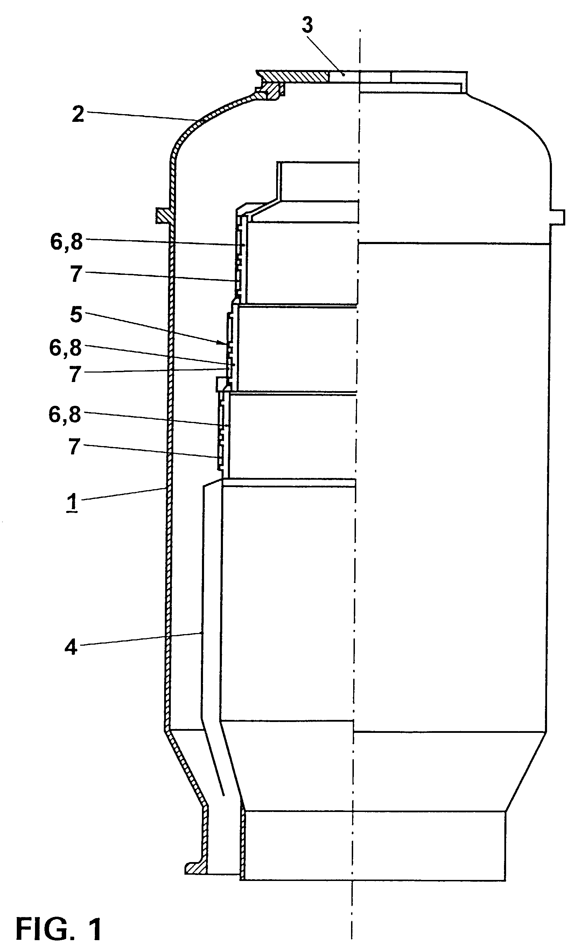

Nachfolgend wird die Erfindung anhand von Ausführungsbeispielen und der Figuren 1 bis 3 näher erläutert.

Fig. 1 zeigt in einer schematischen Darstellung eine Silobrennkammer für eine Gasturbine. In ihr wird durch Verbrennung von flüssigem oder gasförmigem Brennstoff fast das gesamte Luftfördervolumen des Verdichters auf Betriebstemperatur gebracht.

Die Brennkammer besteht aus einem druckfesten Aussenmantel 1, an den ein gewölbter Brennkammerdeckel 2 als oberer Brennkammerabschluss angeflanscht ist. Der Brennkammerdeckel 2 ist mit einer Öffnung 3 für den hier nicht dargestellten Brenner versehen. Der untere Teil der Brennkammer wird von einem hier nicht näher beschriebenen unteren Brennkammereinsatz 4 gebildet.

Die heisseste Zone der Brennkammer wird zur Vermeidung von thermischen Spannungen von einem Ziegeleinsatz 5 umschlossen, welcher über einen nicht dargestellten Tragbolzen am Aussenmantel 1 aufgehängt ist.

Der Ziegeleinsatz 5 besteht gemäss Fig. 1 aus drei Ziegelreihen 6. Diese sind nach unten im Sinne eines zunehmenden Brennraumdurchmesseres gestaffelt. Jede der Ziegelreihen 6 ist aus vielen einzelnen, relativ lose mit einem zylindrischen Tragmantel 7 verbundenen Ziegeln 8 aufgebaut. Die Ziegeln 8 sind im Tragmantel 7 eingehängt und können leicht ausgewechselt werden. Die lose Verbindung zwischen Ziegel 8 und Tragmantel 7 führt zwangsläufig zu Spalten 9 zwischen den Ziegeln 8 der ersten Ziegelreihe 6 und dem Tragmantel 7 der zweiten Ziegelreihe 6 bzw. zwischen den Ziegeln 8 der zweiten Ziegelreihe 6 und dem Tragmantel 7 der dritten Ziegelreihe 6. Da die Ziegeln 8 luftgekühlt sind, verursachen die Spalte 9 unerwünschte Undichtigkeiten, durch welche die Kühlluft 12 in die Brennkammer eindringen kann. Deshalb sind zwecks Abdichtung der Spalte 9 dort jeweils Dichtungen 10 angeordnet. Erfindungsgemäss werden die Dichtungen 10 unter Federspannung so an die Ziegel 8 und/oder den Tragmantel 7 angepresst, dass die Spalte 9 minimiert werden.

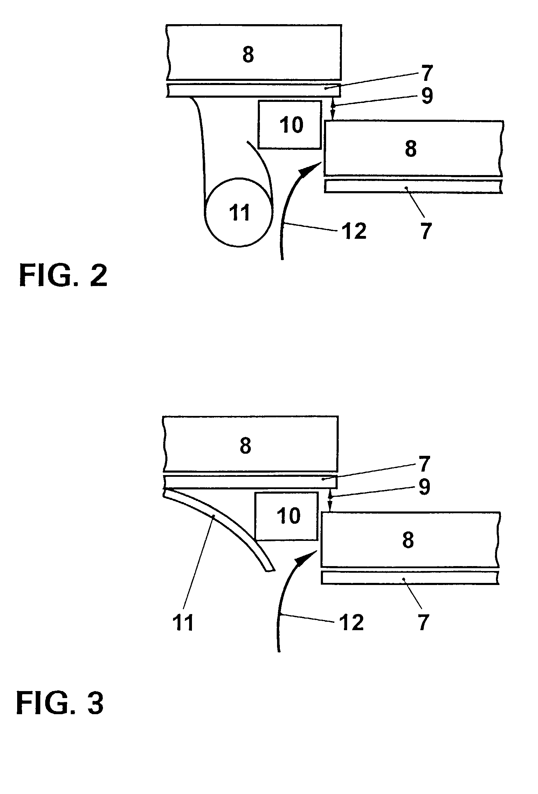

Das wird in Fig. 2 näher verdeutlicht. Fig. 2 zeigt in einem Detailausschnitt von Fig. 1 (Längsschnitt) schematisch den Bereich der Brennkammer, in welchem zwei aufeinanderfolgende Ziegelreihen aneinandergrenzen. Die Ziegel 8 jeder Reihe sind jeweils in einen Tragmantel 7 eingehängt. Die Ziegel 8 sind zwangsweise konvektiv gekühlt, und zwar strömt die Kühlluft 12 zwischen Ziegel 8 und Tragmantel 7. Der zu dichtende Spalt 9 befindet sich zwischen dem Tragmantel 7 der ersten Ziegel- reihe und den Ziegeln 8 der zweiten Ziegelreihe. Dort ist die Dichtung 10 (Dichtungsring) eingelegt. Am Tragmantel 7 für die erste Ziegelreihe sind in der Nähe der Dichtung 10 über den Umfang verteilt mehrere Schraubenfedern 11 fest am Tragmantel 7 verankert. Sie können z.B. angeschweisst sein. Die Schraubenfedern 11 drücken die Dichtung 10 in den näherungsweise rechtwinkligen Spalt zwischen Tragmantel 7 und Ziegel 8. Dabei kann die Federkraft so ausgerichtet sein, dass entweder ein Anpressdruck nur auf den Ziegel 8 oder nur auf den Tragmantel 7 oder aber auf beides entsteht. Letzteres ist zu bevorzugen, weil dann die Dichtwirkung am besten ist.

Anstelle der Schraubenfeder 11 kann auch eine mit einer bestimmten Vorspannung am Tragmantel 7 befestigte Torsionsfeder angeordnet sein.

Die praktische Ausführung der Dichtanordnung ist dann besonders vorteilhaft, wenn sie im kalten Zustand der Brennkammer nahezu kräftefrei ist und sich die Federkräfte durch geeignete Wahl der Geometrie und der Materialien der Feder 11 im heissen Zustand der Brennkammer selbst richtig einstellen.

Fig. 3 zeigt eine weitere Ausführungsvariante der Erfindung. Die Feder 11 ist in diesem Falle eine Blattfeder, die unter einer Vorspannung am Tragmantel 7 fest angebracht ist.

Selbstverständlich ist die Erfindung nicht auf die hier beschriebenen Ausführungsbeispiele beschränkt. Sie kann beispielsweise auch für Kessel eingesetzt werden.

### Bezugszeichenliste

1 Brennkammeraussenmantel
2 Brennkammerdeckel
3 Öffnung in Pos. 2
4 unterer Brennkammereinsatz
5 Ziegeleinsatz
6 Ziegelreihe
7 Tragmantel
8 Ziegel
9 zu dichtender Spalt
10 Dichtung
11 Feder
12 Kühlluft

## Patentansprüche

1. Vorrichtung zur Dichtung von zwangsweise konvektiv gekühlten Brennkammerziegeln (8), wobei die Ziegel (8) in mindestens zwei Ziegelreihen (6) im Sinne eines zunehmenden Brennraumdurchmessers angeordnet und in Tragmäntel (7) eingehängt sind und das Kühlmedium (12) zwischen Ziegel (8) und Tragmantel (7) strömt, und wobei zwischen dem Tragmantel (7) der vorangegangenen Ziegelreihe (6) und der jeweils nachfolgenden Ziegelreihe (6) ein Spalt (9) vorhanden ist, welcher mittels einer Dichtung (10) gedichtet ist, dadurch gekennzeichnet, dass über den Umfang verteilt am Tragmantel (7) mehrere Federn (11) fest verankert sind, welche mit der Dichtung (10) in Verbindung stehen und zumindestens während des Betriebes der Brennkammer die Dichtung (10) in den Spalt (9) zwischen Tragmantel (7) und Ziegel (8) drücken.

2. Vorrichtung nach Anspruch 1, dadurch gekennzeichnet, dass die Feder (11) die Dichtung (10) gleichzeitig an den Tragmantel (7) und an den Ziegel (8) drückt.

3. Vorrichtung nach Anspruch 1, dadurch gekennzeichnet, dass die Feder (11) die Dichtung (10) an den Tragmantel (7) drückt.

4. Vorrichtung nach Anspruch 1, dadurch gekennzeichnet, dass die Feder (11) die Dichtung (10) an den Ziegel (8) drückt.

5. Vorrichtung nach einem der Ansprüche 1 bis 4, dadurch gekennzeichnet, dass die Feder (11) eine Schraubenfeder ist.

6. Vorrichtung nach einem der Ansprüche 1 bis 4, dadurch gekennzeichnet, dass die Feder (11) eine Torsionsstabfeder ist.

7. Vorrichtung nach einem der Ansprüche 1 bis 4, dadurch gekennzeichnet, dass die Feder (11) eine Blattfeder ist.

8. Vorrichtung nach einem der Ansprüche 1 bis 7, dadurch gekennzeichnet, dass Material und Geometrie der Feder (11) so gewählt werden, dass sie im kalten Zustand der Brennkammer nahezu kräftefrei ist und sich im heissen Zustand die Federkräfte selbst richtig einstellen.
